# FASCICULE DE BREVET EUROPEEN

(11) **EP 1 467 535 B1**
(45) Date de publication et mention de la délivrance du brevet: **22.02.2006**
(21) Numéro de dépôt: 04290926.7
(22) Date de dépôt: 07.04.2004
(51) Int. Cl.: H04L 29/06, H04L 12/18, H04N 7/15, H04M 1/253

(54) **Procédé et dispositif de contrôle de flux de données pour la gestion d'un moyen de mémorisation temporaire**
Datenflusskontrolverfahren und Anordnung zur Verwaltung eines temporären Speichers
Data flow control method and device for the management of a temporary storage means

(30) Priorité: 07.04.2003 FR 0304297
(43) Date de publication de la demande: 13.10.2004
(73) Titulaire: FRANCE TELECOM, 75015 Paris (FR)
(72) Inventeur: Thomas, Jean-Philippe, 22660 Trevou Treguignec (FR)
(74) Mandataire: Maillet, Alain

(56) Documents cités:
- ISHIBASHI Y ET AL: "Joint synchronization between live and stored media in multicast communications" -, vol. n.a., 8 novembre 2000 (2000-11-08), pages 330-336, XP010527455 -
- ISHIBASHI Y ET AL: "A comparative survey of synchronization algorithms for continuous media in network environments" -, 8 novembre 2000 (2000-11-08), pages 337-348, XP010527456 -
- AKYILDIZ I F ET AL: "MULTIMEDIA GROUP SYNCHRONIZATION PROTOCOLS FOR INTEGRATED SERVICES NETWORKS" IEEE JOURNAL ON SELECTED AREAS IN COMMUNICATIONS, IEEE INC. NEW YORK, US, vol. 14, no. 1, 1996, pages 162-173, XP000548819 ISSN: 0733-8716
- ISHIBASHI Y ET AL: "A group synchronization mechanism for live media in multicast communications" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, 3 novembre 1997 (1997-11-03), pages 746-752, XP010254701 ISBN: 0-7803-4198-8

## Description

La présente invention concerne un procédé et un dispositif de contrôle de flux de données transitant par l'intermédiaire d'un réseau entre au moins un terminal émetteur et des terminaux récepteurs.

L'invention concerne plus particulièrement le contrôle de flux de données transmises par un ou plusieurs dispositifs émetteurs sous forme de paquets dans un réseau de communication asynchrone par paquet tel que les réseaux ATM (asynchronous transfer mode), Internet ou GPRS (Global Packet Radio Service) et à destination d'un ou de plusieurs terminaux récepteurs.

Plus particulièrement, l'invention se situe dans le domaine du contrôle de flux de données de type audio, transmises sous forme de paquets dans un réseau de type Internet et à destination de plusieurs terminaux récepteurs, ce réseau pouvant comporter une pluralité de voies de communication.

Cette technologie est particulièrement connue sous le nom de transmission de la voix sur réseau Internet et sous l'acronyme VOIP (Voice Over IP en terminologie anglo-saxonne).

Il est néanmoins à remarquer que l'invention est aussi applicable à tout type de données transmises vers de multiples destinataires, par exemple des données vidéo.

Plus précisément, l'invention se situe dans le domaine de la gestion des moyens de mémorisation temporaires des terminaux récepteurs.

La transmission de données sur des réseaux de type Internet ou similaires à celui-ci crée un certain nombre de problèmes comme la perte de paquets, l'introduction d'une gigue importante, et un retard de transmission.

Une solution classique consiste à mémoriser dans une zone mémoire temporaire, appelée par la suite buffer, les données au fur et à mesure qu'elles arrivent au récepteur.

Suite à cette mémorisation dite asynchrone, une lecture de ces données dans le buffer est ensuite effectuée par un dispositif de traitement tel qu'une carte son pour restituer le signal audio correspondant aux données lues.

Généralement, cette lecture de données se fait à un rythme différent de celui auquel les données arrivent au récepteur, la lecture étant effectuée à un rythme constant et prédéterminé.

Le buffer doit être de taille suffisamment grande pour résoudre les problèmes de gigue et de retard de transmission mais doit néanmoins garantir un certain délai minimum de traitement des paquets pour que l'application ne soit pas dégradée.

Afin de réduire ce délai de traitement, il existe différentes techniques telles que la détection au niveau du terminal destinataire, pour chaque paquet reçu, des informations que le paquet contient. S'il contient des informations représentatives de silence et que le buffer est quasiment plein, celui-ci n'est pas mémorisé dans le buffer, par contre s'il contient des informations représentatives de données utiles, celui-ci est mémorisé dans le buffer.

Concernant les paquets comportant des informations utiles, la concaténation de plusieurs paquets en un seul ainsi que la suppression de quelques échantillons de signal parmi l'ensemble des échantillons constituant le paquet, permettent aussi de réduire le délai de traitement.

Si la lecture de données par le dispositif de traitement est telle que le buffer ne contient plus ou peu d'informations, le terminal destinataire peut aussi générer des paquets comportant des informations représentatives de silence, ou dupliquer par exemple le dernier paquet lu par la carte son dans le buffer, ou encore indiquer à la carte son qu'elle doit reproduire une seconde fois le précédent paquet qu'elle a déjà lu.

La publication de Ishibashi intitulée « A comparative survey of synchronisation algorithms for continuous media in network environments » décrit des méthodes de synchronisation entre un ou plusieurs dispositifs d'émission d'un flux multimédia vers un unique dispositif de réception du flux multimédia.

La publication de Akildiz F intitulée « Multimedia group Synchronisation protocols for integrated services networks » décrit un protocole de synchronisation de flux multimedia dans lequel, préalablement à la reproduction du flux multimédia, il est déterminé l'instant de début de récupération du flux multimédia et de sa reproduction en fonction des différents délais induits par le réseau de communication reliant les dispositifs de reproduction du flux multimédia et les dispositifs d'émission du flux multimédia.

Ces techniques adaptées aux communications entre deux dispositifs et par l'intermédiaire d'une seule voie de communication ne sont pas adaptées aux communications à destination de plusieurs dispositifs de réception ou à des communications utilisant une pluralité de voies de communication au sein d'un réseau, en particulier dans les réseaux asynchrones.

En effet, l'utilisation de telles techniques avec plusieurs dispositifs de réception fonctionnant de manière simultanée, comme les systèmes de visioconférence peut générer, par exemple dans le cas de transmission de la voix, des problèmes d'écho acoustique. Ces échos sont particulièrement gênants pour les utilisateurs.

De plus, certains systèmes requièrent une puissance de calcul importante au niveau des terminaux d'émission et/ou de réception. Il est donc nécessaire parfois d'utiliser deux dispositifs de réception sur un même site pour un même flux, par exemple pour des applications stéréophoniques, et ainsi partager les tâches à effectuer. Ceci génère aussi des problèmes de mauvaise synchronisation des signaux restitués.

Finalement, certains systèmes transmettent un ou plusieurs flux audio à travers plusieurs chemins dans le réseau, chemins différents les uns des autres et à destination d'un unique récepteur. Cette multitude de chemins génère aussi des problèmes similaires à ceux précédemment cités.

L'invention tente de résoudre les inconvénients précités en proposant un procédé de traitement pour la gestion d'un moyen de mémorisation temporaire par un dispositif de réception d'un flux de données reçu par l'intermédiaire d'un réseau de communication, le flux étant sous forme de paquets de données qui est caractérisé en ce qu'il exécute, à la réception d'au moins un paquet, les étapes de :
- obtention d'une information prédéterminée à partir d'au moins une partie des données contenues dans un paquet reçu,
- génération d'un message représentatif de l'information prédéterminée à destination d'au moins un autre dispositif de réception de données associé au même flux,
- traitement du paquet reçu en fonction de la réponse reçue du ou des autres dispositifs au message.

Corrélativement, l'invention propose un dispositif de traitement d'un flux de données reçu par l'intermédiaire d'un réseau de communication, pour la gestion d'un moyen de mémorisation temporaire, le flux étant sous forme de paquets de données qui est caractérisé en ce qu'il comporte :
- des moyens pour obtenir une information prédéterminée à partir d'au moins une partie des données contenues dans un paquet reçu,
- des moyens pour générer un message représentatif de l'information prédéterminée à destination d'au moins un autre dispositif de réception également associé au flux de données,
- des moyens pour traiter le paquet reçu en fonction de la réponse de l'autre dispositif au message.

Ainsi, selon l'invention, le traitement des paquets reçus est synchronisé et unifié.

Plus précisément, le traitement du paquet consiste en un stockage ou non de tout ou partie du paquet reçu dans le moyen de mémorisation temporaire et préalablement à l'obtention on compare la quantité d'informations contenues dans le moyen de mémorisation temporaire à un seuil prédéterminé.

Ainsi, seulement lorsque cela est nécessaire, c'est-à-dire lorsque la quantité d'informations contenues dans le moyen de mémorisation est trop importante, des messages sont envoyés. Ainsi, les traitements par les dispositifs seront réduits.

Plus particulièrement, le flux de données est un flux de données audio comprenant des données utiles et des données représentatives de silence et l'information prédéterminée est la présence ou non dans le paquet reçu de silence.

Plus précisément, la réponse d'un ou de chaque autre dispositif de réception est représentative de la présence de données utiles ou de données représentatives de silence dans le dernier paquet reçu par ledit autre dispositif de réception.

Ainsi, chaque dispositif de réception est informé de la présence de paquets contenant du silence parmi les paquets reçus dans les autres dispositifs de réception.

Plus particulièrement, si la réponse reçue de chacun des autres dispositifs de réception est représentative de la présence de données représentatives de silence, on ne stocke pas le paquet reçu dans ledit moyen de mémorisation temporaire.

Plus précisément, si la réponse reçue d'au moins un autre dispositif de réception n'est pas représentative de la présence de données représentatives de silence, on concatène et/ou on échantillonne le paquet reçu, on stocke le paquet concaténé et/ou échantillonné dans le moyen de mémorisation temporaire et on génère un message de demande de concaténation et/ou d'échantillonnage à destination des autres dispositifs

La gestion des moyens de stockage étant faite de façon unifiée, on évite ainsi tout problème de décalage entre les différents récepteurs, ces problèmes étant générateurs d'échos acoustiques croisés dans le cas de signaux sonores. En effet, tous les dispositifs de réception effectueront alors la même opération.

Préférentiellement, l'information prédéterminée est obtenue en déterminant l'énergie du signal audio contenu dans le paquet et en comparant l'énergie déterminée avec une moyenne des énergies des signaux audio contenues dans les paquets précédemment reçus.

Selon une variante, l'information prédéterminée est obtenue en détectant dans le paquet reçu la présence d'une information prédéterminée représentative de la présence de données représentatives de silence dans ledit paquet.

Selon un second mode de réalisation de l'invention, le traitement du paquet consiste en un stockage ou non de tout ou partie du paquet reçu dans le moyen de mémorisation temporaire et l'information prédéterminée est un numéro de paquet.

Ainsi, la numérotation des paquets permet dans le cas de contrôle de flux dans un contexte multivoies de synchroniser les flux de données arrivant par les différentes voies.

Plus précisément, la réponse d'un ou de chaque autre dispositif est représentative de la réception d'un paquet par l'autre dispositif de réception et/ou d'une comparaison du numéro de paquet avec un numéro de paquet obtenu par l'autre dispositif de réception à partir du paquet reçu.

Avantageusement, si la réponse est représentative de la non réception d'un paquet par l'autre dispositif de réception, le dispositif de réception ne stocke pas le paquet reçu et, si la réponse est représentative de la réception d'un paquet par l'autre dispositif de réception, le dispositif de réception stocke au moins une partie du paquet reçu dans ledit moyen de mémorisation temporaire.

Ainsi, la saturation du moyen de mémorisation sera réduite tout en maintenant une homogénéité avec le contenu des moyens de mémorisation des autres dispositifs.

Corrélativement, l'invention propose un procédé de traitement pour la gestion d'un moyen de mémorisation temporaire par un dispositif de réception d'un flux de données reçu par l'intermédiaire d'un réseau de communication, le flux étant sous forme de paquets de données qui est caractérisé en ce qu'il comporte les étapes de :
- réception d'un message d'un autre dispositif de réception également associé au flux de données, le message étant représentatif d'une information prédéterminée obtenue à partir d'au moins une partie des données contenues dans un paquet reçu par cet autre dispositif,
- obtention d'informations représentatives de la réception d'un paquet reçu et/ou du contenu dudit paquet reçu,
- génération d'un message à destination de l'autre dispositif à partir des informations obtenues.

L'invention concerne aussi un dispositif de traitement pour la gestion d'un moyen de mémorisation temporaire par un dispositif de réception d'un flux de données reçu par l'intermédiaire d'un réseau de communication, le flux étant sous forme de paquets de données qui est caractérisé en ce qu'il comporte :
- des moyens pour recevoir un message d'un autre dispositif de réception également associé au flux de données, le message étant représentatif d'une information prédéterminée obtenue à partir d'au moins une partie des données contenues dans un paquet reçu par cet autre dispositif,
- des moyens pour obtenir des informations représentatives de la réception d'un paquet qu'il a reçu et/ou du contenu dudit paquet reçu,
- des moyens pour générer un message à destination de l'autre dispositif à partir des informations obtenues.

Ainsi, cet échange d'informations entre plusieurs récepteurs associés à un même flux de données permet à chacun de ces dispositifs d'avoir une connaissance sur les informations reçues par les autres dispositifs associés au même flux.

Les avantages des dispositifs étant identiques à ceux mentionnés pour les procédés qu'ils mettent en oeuvre, ceux-ci ne seront pas rappelés.

L'invention concerne aussi un procédé de transmission d'un flux de données par une pluralité de dispositifs émetteurs à travers un réseau de communication à destination d'au moins un dispositif de réception, les flux étant sous forme de paquets de données qui est caractérisé en ce que le procédé, au niveau d'un des dispositifs émetteurs dit dispositif d'émission maître, effectue les étapes de :
- détermination d'un identifiant par paquet à transmettre,
- marquage de chaque paquet par son identifiant respectif,
- transmission du paquet marqué,
- transfert de l'identifiant aux autres dispositifs émetteurs.

L'invention concerne aussi un système de transmission d'un flux de données par une pluralité de dispositifs émetteurs à travers un réseau de communication à destination d'au moins un dispositif de réception, les flux étant sous forme de paquets de données qui est caractérisé en ce qu'un des dispositifs émetteurs dit dispositif d'émission maître, détermine un identifiant par paquet qu'il a à transmettre, marque chaque paquet par son identifiant respectif, transmet le paquet marqué, et transfère l'identifiant aux autres dispositifs émetteurs pour la gestion d'un moyen de mémorisation temporaire.

Plus précisément, les autres dispositifs émetteurs marquent les paquets qu'ils ont à transmettre avec les identifiants transférés par le dispositif d'émission maître.

Ainsi, lors de l'émission de données, celles-ci seront classifiées et cela permet une recomposition des flux de données par les dispositifs destinataires évitant ainsi les problèmes liés à l'asynchronisme du réseau.

L'invention concerne aussi un programme d'ordinateur stocké sur un support d'informations, ledit programme comportant des instructions permettant de mettre en oeuvre un procédé de traitement conforme à l'invention, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
- la Fig. 1 représente un système de communication conforme à un premier mode de réalisation de l'invention ;
- la Fig. 2 représente un schéma bloc décrivant les principaux éléments d'un dispositif de communication conforme au premier mode de réalisation de l'invention ;
- la Fig. 3 représente l'algorithme mis en oeuvre dans un dispositif d'émission réception dit dispositif de réception requérant selon le premier mode de réalisation de l'invention ;
- la Fig. 4 représente l'algorithme mis en oeuvre dans un dispositif d'émission réception dit dispositif de réception répondant selon le premier mode de réalisation de l'invention ;
- la Fig. 5 représente un système de communication conforme à un second mode de réalisation de l'invention ;
- la Fig. 6 représente un schéma bloc décrivant les principaux éléments d'un dispositif de communication conforme au second mode de réalisation de l'invention ;
- la Fig. 7 représente l'algorithme mis en oeuvre dans un dispositif d'émission maître selon le second mode de réalisation de l'invention ;
- la Fig. 8 représente l'algorithme mis en oeuvre dans un dispositif d'émission esclave selon le second mode de réalisation de l'invention ;
- la Fig. 9 représente l'algorithme mis en oeuvre dans un dispositif de réception maître selon le second mode de réalisation de l'invention ;
- la Fig. 10 représente l'algorithme mis en oeuvre dans un dispositif de réception esclave selon le second mode de réalisation de l'invention.

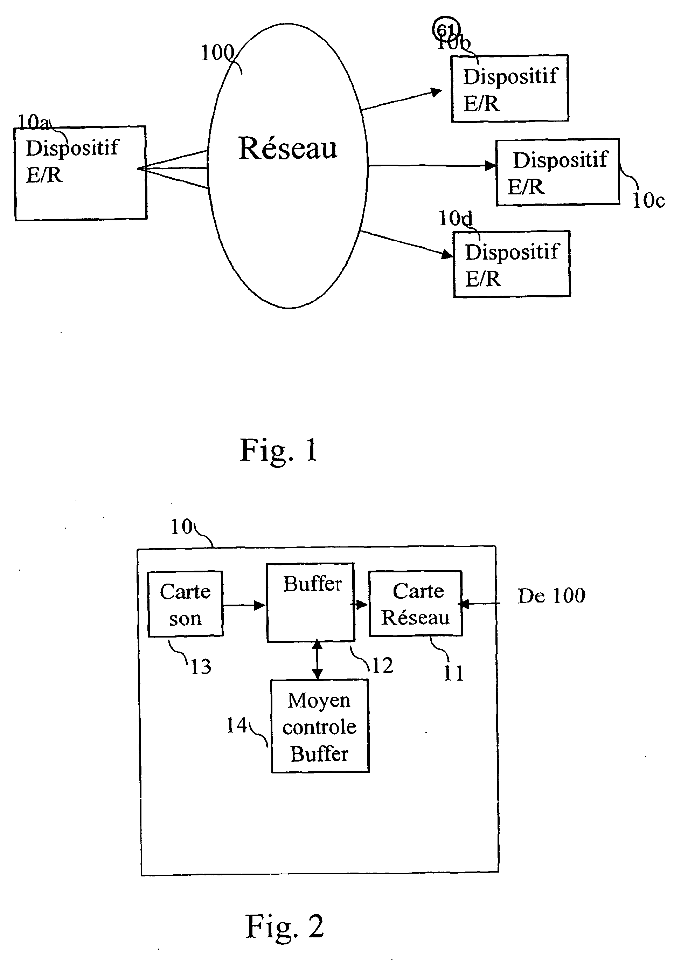

La Fig. 1 représente un système de communication conforme à un premier mode de réalisation de l'invention. Le système de communication est constitué d'un dispositif d'émission réception 10a transférant un flux de données à plusieurs dispositifs d'émission réception notés 10b, 10c et 10d par l'intermédiaire d'un réseau de communication 100.

Il est à remarquer que trois dispositifs de réception sont représentés ici, ces dispositifs de réception pouvant se trouver dans des endroits géographiques différents. Deux dispositifs de réception seulement peuvent recevoir des informations du dispositif émission 10a. Cependant, l'invention est envisageable avec un nombre plus important de dispositifs de réception. Les dispositifs d'émission et de réception 10 sont par exemple des dispositifs de visioconférence, des micro-ordinateurs, etc.

Ces dispositifs d'émission réception sont bidirectionnels. Le dispositif d'émission réception 10a peut par exemple transmettre un flux de données à destination des dispositifs d'émission réception 10b, 10c et 10d et simultanément le dispositif d'émission réception 10b transmettre un flux de données à destination des dispositifs d'émission réception 10a, 10c et 10d.

La Fig. 2 représente un schéma bloc décrivant les principaux éléments d'un dispositif d'émission réception 10 conforme au premier mode de réalisation de l'invention. Le fonctionnement de la partie émission de données étant classique, seul le fonctionnement de la partie réception de données est décrit.

Le dispositif d'émission réception 10 est constitué d'une interface réseau 11, qui est par exemple une carte réseau constituée d'un modem permettant l'accès à un réseau de type Internet référencé 100.

Il est à remarquer que le réseau peut aussi être de type ATM (Asyncronous Transfer Mode) ou de type GPRS (General Packet Radio Services).

Dans le cas où le réseau est de type GPRS, le dispositif d'émission réception 10 peut être incorporé dans un téléphone conforme à ce standard.

Le dispositif d'émission réception 10 comporte un moyen de contrôle 14 d'une mémoire temporaire 12. Le moyen de contrôle 14, par exemple, dans le cas ou il s'agit du moyen de contrôle 14 du dispositif d'émission réception 10b, est en charge d'assurer la transmission de messages à destination des dispositifs de réception 10a, 10c, 10d, et aussi de gérer le bon remplissage du buffer 12 en fonction des messages transmis par les dispositifs d'émission réception 10a, 10c, 10d.

Le moyen de contrôle 14, selon le besoin, génère des paquets vides ou assure la duplication de paquets dans la mémoire temporaire, concatène des paquets ou assure un sous-échantillonnage des données contenues dans les paquets de données.

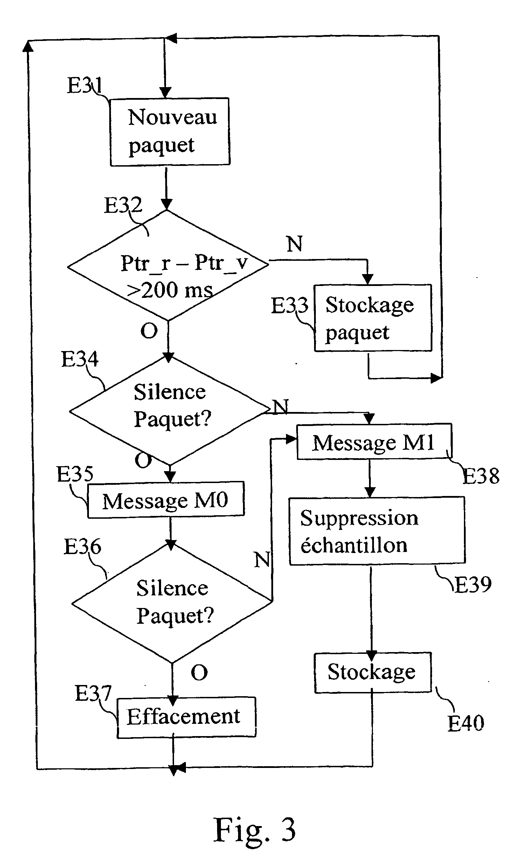

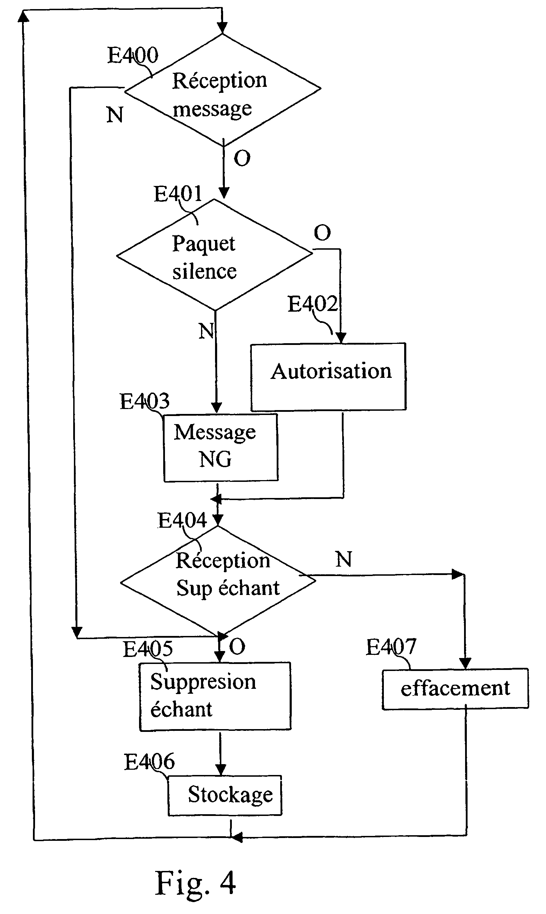

Le moyen de contrôle 14 peut, par exemple, être constitué d'un contrôleur comprenant un processeur, d'une mémoire morte (ROM) comprenant les programmes associés aux algorithmes tels que décrits ultérieurement en référence aux Figs. 3 et 4 ainsi que d'une mémoire vive (RAM) utilisée pour stocker les variables nécessaires à l'exécution des programmes, ou à la réalisation de calculs.

Selon un mode préféré, le moyen de contrôle 14 est l'unité centrale d'un ordinateur de type PC. Dans ce cas, le processeur de l'ordinateur, la mémoire vive et la mémoire morte de l'ordinateur sont les constituants du moyen de contrôle.

Le dispositif d'émission réception 10 comporte en outre une carte son 13 chargée de retranscrire les paquets stockés dans la mémoire 12 en un signal acoustique. Il est à remarquer que la carte son 13 lit les données présentes dans la mémoire 12 à un rythme prédéterminé. Ceci peut par exemple être une carte son classique utilisée dans des ordinateurs de type PC.

La Fig. 3 représente l'algorithme mis en oeuvre dans un dispositif d'émission réception dit dispositif de réception requérant selon le premier mode de réalisation de l'invention.

On entend ici par dispositif de réception requérant, le dispositif de réception qui, par exemple, parmi l'ensemble des dispositifs de réception 10b, 10c 10d recevant un flux de données du dispositif d'émission réception 10a a son buffer de réception quasiment plein, c'est-à-dire le dispositif de réception 10b, 10c 10d du flux de données qui rencontre le problème de remplissage de son buffer 12, comme cela sera décrit ultérieurement en référence à l'étape E32 de la Fig. 3.

Bien entendu, tous les dispositifs de réception 10b, 10c et 10d implémentent l'algorithme de la Fig. 3.

De manière générale, l'invention vise à rendre la gestion des mémoires dans chaque dispositif de réception 10b, 10c et 10d, si le dispositif d'émission réception 10a leur transmet un flux de données, dépendantes l'une de l'autre de manière à avoir le même nombre de paquets dans chaque mémoire temporaire 12 des dispositifs de réception 10b, 10c et 10d.

Plus précisément, si un dispositif de réception 10b modifie ou ne mémorise pas un paquet, ce n'est qu'à la condition que tous les autres dispositifs de réception 10c et 10d fassent de même.

A la mise sous tension du dispositif de réception, et plus particulièrement dans le cas d'une utilisation d'un ordinateur comme dispositif de réception, le processeur lit à partir de la mémoire morte de l'ordinateur ou d'un support d'informations tel qu'un disque compact CD-ROM, les instructions du programme correspondant aux étapes E31 à E40 de la Fig. 3 et les charge en mémoire vive RAM pour les exécuter.

L'étape E31 de la Fig. 3 consiste en la réception par la carte réseau 11 des dispositifs d'émission réception 10b, 10c 10d d'un paquet provenant du réseau 100. Suite à cette étape, le contrôleur 14 de chaque dispositif de réception 10b, 10c et 10d vérifie la quantité d'informations déjà présentes dans la mémoire 12 de son dispositif de réception 10 à l'étape E32.

Ceci est effectué en faisant la différence entre l'adresse courante du pointeur de remplissage ou d'écriture de la mémoire 12 et l'adresse courante du pointeur de vidage ou de lecture de la mémoire 12 et en comparant cette différence à un seuil prédéterminé équivalent ici à une durée de restitution sonore de l'ordre de 200ms (millisecondes).

Ce seuil est considéré comme le délai de traitement maximum des paquets reçus sans dégrader la qualité de restitution du signal. Ce seuil peut bien entendu être différent selon l'application envisagée.

Sachant combien de paquets sont nécessaires à une restitution sonore d'une certaine durée, on déduit, en faisant la différence entre les adresses des deux pointeurs, la durée restante du signal acoustique.

Si la différence entre les adresses des deux pointeurs est inférieure au seuil prédéterminé (équivalent à une durée de restitution sonore de l'ordre de 200ms), le paquet reçu est stocké de manière classique dans le buffer 12 à l'étape E33 et le contrôleur 14 retourne à l'étape E31 pour attendre l'arrivée d'un nouveau paquet à traiter.

Dans le cas contraire, le buffer est quasiment plein, c'est par exemple le cas du dispositif de réception 10b, le dispositif de réception 10b est alors considéré comme dispositif de réception requérant.

Le contrôleur 14 du dispositif requérant 10b passe à l'étape E34 qui consiste à obtenir une information prédéterminée à partir d'au moins une partie des données contenues dans le paquet reçu. Plus précisément, dans le cas d'une application véhiculant des signaux audio, le contrôleur 14 du dispositif requérant 10b analyse le signal contenu dans le paquet et ainsi détermine s'il contient du signal utile, c'est-à-dire de la voix ou s'il contient du silence.

Préférentiellement, le contrôleur 14 du dispositif requérant 10b détermine si le paquet contient du signal utile ou du silence en analysant l'énergie du signal audio contenue dans le paquet et en comparant cette énergie avec une moyenne des énergies des signaux audio contenues dans les paquets précédemment reçus et analysés.

Si l'énergie du signal audio contenue dans un paquet est inférieure à la moyenne des énergies des signaux audio contenues dans les paquets précédemment reçus et analysés, le paquet contient du silence, sinon le paquet contient du signal utile.

Selon une variante, l'obtention de l'information prédéterminée est effectuée en détectant dans le paquet la présence d'un marqueur indiquant que celui-ci comporte des informations susceptibles d'être non utiles.

En variante, un indicateur indiquant que le signal contenu dans le paquet est représentatif de silence est inclus dans le paquet. L'obtention de l'information prédéterminée se résume alors à une simple lecture de cet indicateur.

Si à l'étape E34, le contrôleur 14 du dispositif requérant 10b a déterminé la présence de signal utile dans le paquet reçu, celui-ci passe à l'étape E38 et génère un message M1 à destination des autres dispositifs de réception destinataires du flux de données, dits dispositifs de réception répondants 10c, 10d, les informant du passage dans un mode suppression de paquets contenant des données utiles.

Il est à noter que les adresses de chaque dispositif d'émission réception 10 ont été mémorisées par chacun des dispositifs d'émission réception 10 au début de la communication.

Cette étape effectuée, le contrôleur 14 du dispositif requérant 10b passe à l'étape E39 dans le mode de suppression. Ce mode de suppression peut correspondre à un mode de concaténation de paquets reçus, la concaténation se faisant avec le paquet reçu mais pas encore stocké et le dernier paquet stocké, ou avec le prochain paquet, ou un mode de sous-échantillonnage des données contenues dans un paquet.

A l'étape E39, le contrôleur 14 du dispositif requérant 10b concatène ou sous-échantillonne le paquet reçu. Il est à remarquer, et comme cela sera décrit en référence à la Fig. 4, que la concaténation ou le sous-échantillonnage est effectué de la même façon par les autres dispositifs récepteurs répondants 10c et 10d.

La concaténation ou le sous échantillonnage étant réalisé, le contrôleur 14 du dispositif requérant passe à l'étape E40 et stocke le paquet reçu qui a été modifié à l'étape E39 dans le moyen de stockage temporaire 12.

Cette opération réalisée, le contrôleur 14 du dispositif requérant 10b retourne à l'étape E31 précédemment décrite pour attendre l'arrivée d'un nouveau paquet.

Si à l'étape E34, le contrôleur 14 du dispositif requérant 10b a déterminé la présence de silence dans le paquet reçu, contrairement aux techniques classiques, le contrôleur 14 du dispositif requérant 10b ne va pas systématiquement effacer ce paquet ou ne pas le stocker s'il contient du silence, mais au contraire génère, à l'étape E35, un message M0 comportant une information prédéterminée représentative de la détection d'un paquet de silence à destination des autres dispositifs récepteurs, c'est-à-dire les dispositifs récepteurs répondants 10c et 10d du même flux de données. Ce message est par exemple une demande d'autorisation pour ne pas stocker le paquet.

L'étape E35 effectuée, le contrôleur 14 du dispositif requérant 10b passe ensuite à l'étape E36 qui consiste à vérifier si tous les dispositifs de réception dits dispositifs répondants 10, 10d ont aussi reçu un paquet de silence. Pour cela, le contrôleur 14 du dispositif requérant 10b attend une réponse de chacun des dispositifs récepteurs répondants 10c, 10d du même flux de données à la requête précédemment envoyée à l'étape E35.

Cette réponse est par exemple un message d'autorisation de suppression de paquet.

Si à l'étape E36, au moins un des autres dispositifs récepteurs répondants 10c, 10d n'a pas répondu affirmativement, le contrôleur passe à l'étape E38 précédemment décrite.

Si tous les dispositifs récepteurs répondants 10c, 10d répondent affirmativement, dans ce cas, le contrôleur 14 du dispositif requérant 10b passe à l'étape suivante E37 qui consiste à ne pas mémoriser le paquet reçu dans la mémoire temporaire 12, voire effacer le paquet présent dans la carte réseau 11. L'étape E37 ayant été effectuée, le processeur 14 du dispositif requérant 10b retourne à l'étape E31.

La Fig. 4 représente l'algorithme mis en oeuvre dans un dispositif d'émission réception dit dispositif de réception répondant selon le premier mode de réalisation de l'invention.

Cet algorithme est exécuté par chacun des dispositifs d'émission réception recevant ce même flux en parallèle avec l'algorithme tel que décrit en référence à la Fig. 3.

Par exemple, le dispositif d'émission réception 10a émet un flux de données à destination des dispositifs d'émission réception 10b, 10c et 10d, le dispositif de réception 10b est un dispositif de réception répondant comme précédemment décrit en référence à la Fig. 3 et les dispositifs de réception 10c et 10d sont des dispositifs de réception répondants.

Ces dispositifs de réception répondants 10c, 10d reçoivent le même flux de données que le dispositif de réception requérant 10b précédemment décrit.

A la mise sous tension du dispositif de réception, et plus particulièrement dans le cas d'une utilisation d'un ordinateur comme dispositif de réception, le processeur lit à partir de la mémoire morte de l'ordinateur ou d'un support d'informations tel qu'un disque compact CD-ROM, les instructions du programme correspondant aux étapes E400 à E407 de la Fig.4 et les charge en mémoire vive RAM pour les exécuter.

L'étape E400 de l'algorithme correspond à l'attente de la réception du message généré par l'autre dispositif de réception dit dispositif de réception requérant 10b lors de l'étape E35 ou de l'étape E38 de la Fig. 3, en l'occurrence, la demande d'autorisation de non stockage M0 ou la demande de passage au mode suppression M1.

Si le message reçu est conforme à celui envoyé à l'étape E38 (message M1), l'algorithme passe à l'étape E405 qui sera décrite ultérieurement.

Si c'est un message M0 tel que celui envoyé à l'étape E35, le contrôleur 14 du dispositif répondant par exemple 10c passe à l'étape E401. Cette étape consiste à analyser le contenu du dernier paquet reçu et à déterminer s'il contient du signal utile, c'est-à-dire de la voix ou s'il contient un signal représentatif de silence.

Si le paquet analysé contient du silence, on passe à l'étape E402 qui consiste à générer un message de réponse affirmative, à destination du dispositif de réception requérant 10b, en réponse à sa demande d'autorisation de suppression.

Cette opération effectuée, l'algorithme passe à l'étape E404 qui sera décrite ultérieurement.

Si le test E401 est négatif, l'algorithme passe à l'étape E403 qui consiste à générer un message de réponse négative, à destination du dispositif de réception requérant 10b, en réponse à sa demande d'autorisation de suppression.

L'étape suivante E404 consiste à attendre pendant un temps prédéterminé la réception d'un signal d'indication de basculement dans le mode suppression telle que décrit à l'étape E38 de la Fig. 3.

Si aucun message n'est reçu pendant ce temps prédéterminé, implicitement cela veut dire que tous les autres dispositifs répondants 10d ont répondu affirmativement à la demande M0 d'autorisation d'effacement d'un paquet de silence, donc que tous les dispositifs de réception 10b, 10c, 10d ont reçu également un paquet vide. Le contrôleur 14 du dispositif répondant 10c passe alors à l'étape E407 qui consiste à ne pas mémoriser le paquet reçu dans la mémoire 12 ou effacer celui-ci de la mémoire 12.

Cette étape réalisée, le contrôleur 14 du dispositif répondant 10c retourne à l'étape E400 précédemment décrite.

Si par contre, le message tel que généré lors de l'étape E38 de la Fig. 3 est reçu pendant ce temps prédéterminé, implicitement cela veut dire qu'il existe au moins un dispositif répondant 10d qui n'a pas répondu affirmativement à la demande d'autorisation d'effacement d'un paquet de silence, donc qu'au moins un dispositif répondant 10d n'a pas reçu également un paquet vide. Le contrôleur 14 passe alors à l'étape E405 qui consiste à passer dans le mode suppression de paquets contenant des données utiles tel que décrit à l'étape E39 de la Fig. 3.

En variante, le message de réponse généré à l'étape E402 est diffusé à tous les autres dispositifs récepteurs répondants 10d, leur adresse étant bien sûr connue préalablement. Chaque dispositif de réception répondant (10d) effectuant cette diffusion, tous les dispositifs récepteurs répondants sont informés du fait que tous les dispositifs répondants 10d ont répondu affirmativement. Cette variante permet aux dispositifs récepteurs répondants 10c, 10d d'éviter d'attendre pendant un temps prédéterminé la réception d'un signal d'indication de basculement dans le mode suppression.

Ici, à titre d'exemple, deux modes de concaténation sont envisagés. Soit un seul mode peut être prédéfini pour l'ensemble des dispositifs de réception (10b, 10c 10d), soit le dispositif de réception requérant 10b indique dans le message généré à l'étape E38 de la Fig. 3 le mode de concaténation qui doit être appliqué par tous les dispositifs récepteurs répondants 10c, 10d.

L'étape E405 effectuée, le contrôleur 14 du dispositif répondant 10c procède au stockage du paquet reçu et modifié à l'étape E405 dans le moyen de stockage temporaire 12 à l'étape E406.

Cette opération réalisée, le contrôleur 14 du dispositif répondant 10c retourne à l'étape E400 précédemment décrite pour attendre l'arrivée d'un nouveau message.

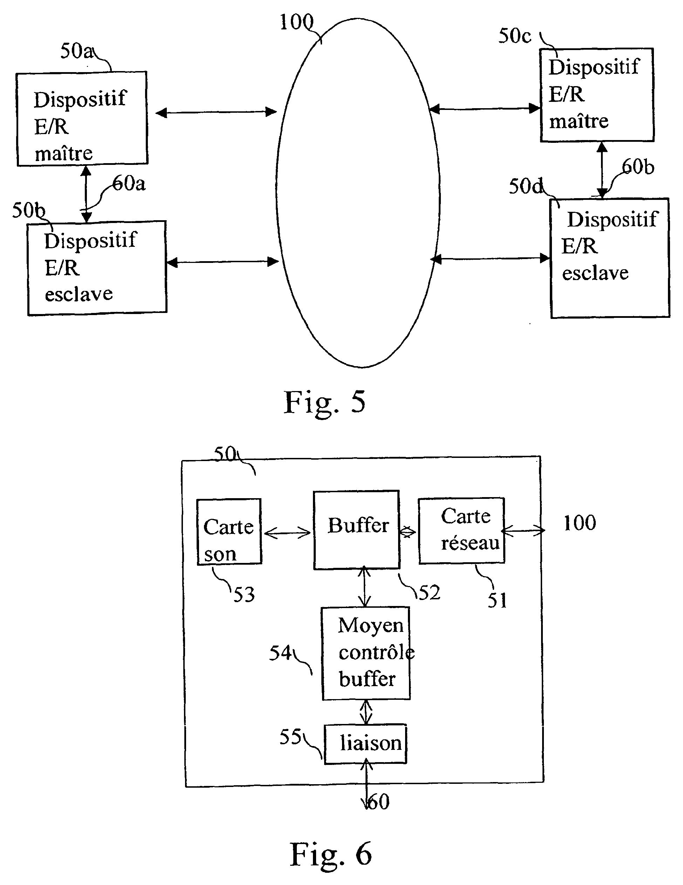

La **Fig. 5** représente un système de communication conforme à un second mode de réalisation de l'invention.

Ce système de communication est également adapté pour des applications telles que la prise de son multivoies dans le cas d'un orchestre musical ou de systèmes de visioconférence multi-locuteurs où l'on veut restituer le son de chaque voie sur un système indépendant pour que les personnes du site distant apprécient le relief et la spatialisation du son comme si elles étaient présentes localement.

Ce système de communication est également adapté à des applications qui requièrent un grand nombre de calculs pour les réaliser. Pour cela, on utilise plusieurs machines qui vont chacune traiter et effectuer des calculs sur une partie du flux. Pour ce type de système, il est nécessaire d'avoir aussi une bonne gestion des moyens de mémorisation temporaire afin d'éviter tout décalage entre les différents dispositifs de réception.

Le système de communication tel que décrit en référence à la Fig. 5 comporte quatre dispositifs d'émission réception référencés 50a, 50b, 50c, 50d.

Il est à remarquer que le réseau 100 est un réseau de transmission par paquet , il peut être de type Internet ou ATM ou de type GPRS.

Dans le cas où le réseau est de type GPRS, le dispositif d'émission réception 10 peut être incorporé dans un téléphone conforme à ce standard.

Les dispositifs d'émission réception 50a et 50b sont préférentiellement situés sur un même site géographique. Les dispositifs d'émission réception 50c et 50d sont préférentiellement situés sur un même site différent du site des dispositifs d'émission réception 50a et 50b. Il est à noter que par souci de clarté, seulement deux dispositifs d'émission réception sont décrits et représentés par site, mais un nombre plus important de dispositifs d'émission réception peuvent être placés sur chacun des sites.

Ici, dans ce second mode de réalisation de l'invention, sur chaque site, il existe un dispositif d'émission réception maître, les autres dispositifs d'émission réception sur le même site étant esclaves de celui-ci.

Contrairement à la Fig. 1, les dispositifs d'émission 50a et 50b et respectivement 50c et 50d sont reliés entre eux par un second réseau de communication 60a, 60b ou une liaison 60a, 60b qui est à titre d'exemple une liaison RS232 série.

En variante, le réseau 100 peut être aussi utilisé comme second réseau de communication 60a, 60b entre les deux dispositifs d'émission réception 50a et 50b et/ou les deux dispositifs d'émission réception 50c et 50d.

Il est à remarquer aussi que les dispositifs d'émission réception 50 sont bidirectionnels et donc peuvent simultanément être émetteur et récepteur.

La Fig. 6 représente un schéma bloc décrivant les principaux éléments d'un dispositif d'émission réception 50 conforme au second mode de réalisation de l'invention. Les blocs 51, 52 et 53 sont respectivement identiques aux blocs 11, 12 et 13 décrits en référence à la Fig. 1, ils ne seront donc pas plus décrits.

Le contrôleur 54 est apte à effectuer les mêmes opérations que le contrôleur 14 de la Fig. 1. Il assure en sus, la gestion des numéros de paquets que ce soit en émission ou en réception, la communication via la liaison de communication 55 avec un autre dispositif d'émission réception situé sur le même site.

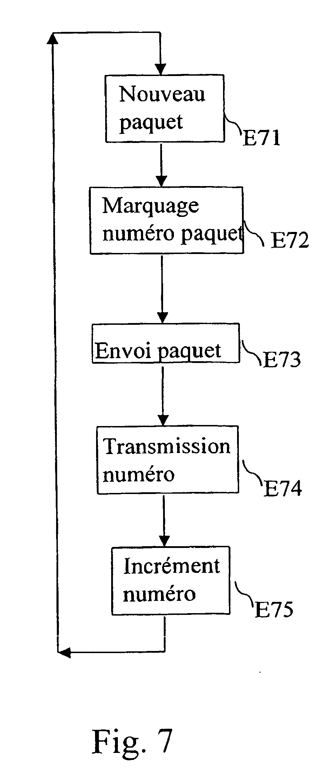

Le contrôleur 54 exécute l'algorithme qui sera décrit en regard de la Fig. 7 s'il est contrôleur d'un dispositif d'émission maître.

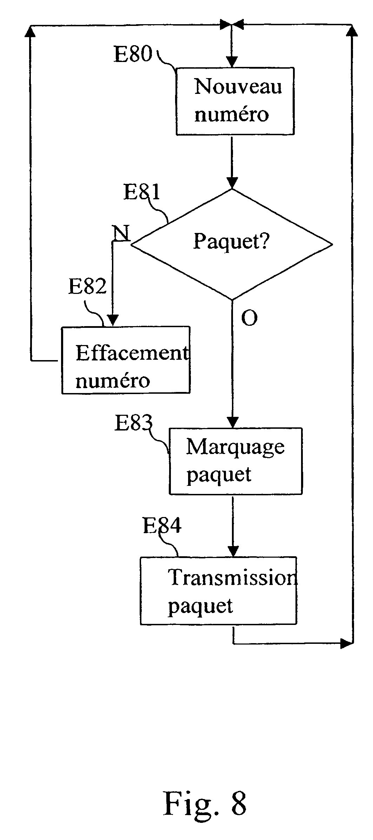

Le contrôleur 54 exécute l'algorithme qui sera décrit en regard de la Fig. 8 s'il est contrôleur d'un dispositif d'émission esclave.

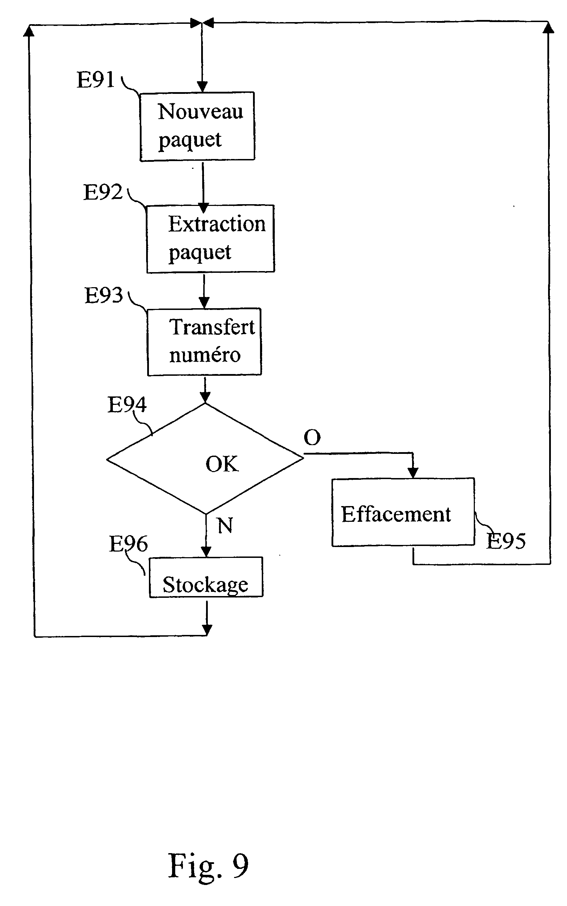

Le contrôleur 54 exécute aussi l'algorithme qui sera décrit en regard de la Fig. 9 s'il est contrôleur d'un dispositif de réception maître.

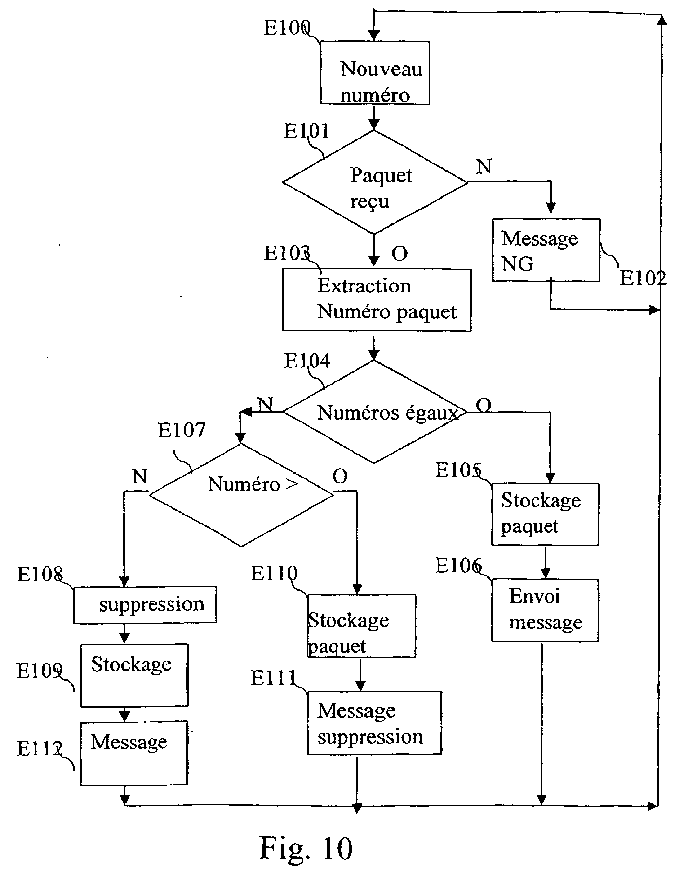

Le contrôleur 54 exécute aussi l'algorithme qui sera décrit en regard de la Fig. 10 s'il est contrôleur d'un dispositif de réception esclave.

Selon un mode préférentiel, le contrôleur 54 est l'unité centrale d'un ordinateur de type PC. Dans ce cas, le processeur de l'ordinateur, la mémoires vive (RAM) et la mémoire morte (ROM) de l'ordinateur vont être les constituants du contrôleur 54.

Le bloc de liaison 55 est par exemple un port de communication bidirectionnel de type RS232.

La Fig. 7 représente l'algorithme mis en oeuvre dans un dispositif d'émission maître 50, par exemple 50a selon le second mode de réalisation de l'invention.

De manière générale, le dispositif d'émission maître donne un identifiant au (x) paquet (s) qu'il transmet sur le réseau 100 et indique cet identifiant au (x) dispositif (s) d'émission esclave (s).

A la mise sous tension du dispositif de réception, et plus particulièrement dans le cas d'une utilisation d'un ordinateur comme dispositif d'émission, le processeur lit à partir de la mémoire morte de l'ordinateur ou d'un support d'information tel qu'un disque compact CD-ROM, les instructions du programme correspondant aux étapes E71 à E75 de la Fig.7 et les charge en mémoire vive RAM pour les exécuter.

La première étape E71 de l'algorithme consiste en l'attente de la transmission d'un paquet à destination d'un dispositif de réception, ici le dispositif de réception maître noté 50c dans la Fig. 5.

Dès qu'un paquet est prêt à être transmis, le contrôleur 54 du dispositif d'émission maître 50a, à l'étape E72, insère dans le paquet à transmettre un identifiant de paquet, plus précisément un numéro d'ordre.

Cet identifiant inséré, le contrôleur 54 du dispositif d'émission maître 50a transfère ensuite, à l'étape E73, le paquet identifié sur le réseau 100, par l'intermédiaire de la carte d'interface réseau 51, à destination du dispositif de réception maître noté 50c dans la Fig. 5.

Il transmet ensuite à l'étape E74, ou de manière simultanée, ce numéro au dispositif de réception esclave 50b via l'interface de liaison 55 et la liaison 60a.

Cette opération réalisée, le contrôleur 54 du dispositif d'émission maître 50a incrémente le numéro d'ordre, par exemple d'une unité à l'étape E75 pour enfin retourner à l'étape E71 et attendre un nouveau paquet à transmettre.

La Fig. 8 représente l'algorithme mis en oeuvre dans un dispositif d'émission esclave 50, par exemple 50b selon le second mode de réalisation de l'invention.

A la mise sous tension du dispositif de réception, et plus particulièrement dans le cas d'une utilisation d'un ordinateur comme dispositif d'émission, le processeur lit à partir de la mémoire morte de l'ordinateur ou d'un support d'information tel qu'un disque compact CD-ROM, les instructions du programme correspondant aux étapes E80 à E84 de la Fig.8 et les charge en mémoire vive RAM pour les exécuter.

La première étape E80 de l'algorithme consiste en l'attente de la réception par l'intermédiaire de la liaison 60a avec le dispositif d'émission maître 50a d'un identifiant alloué par le dispositif d'émission maître noté 50a en Fig. 5.

A la réception de cet identifiant qui est plus particulièrement un numéro d'ordre, le contrôleur 54 du dispositif d'émission esclave 50b vérifie à l'étape E81 s'il a des paquets à transmettre.

S'il n'a pas de paquet à transmettre, c'est-à-dire si le buffer est vide, ou que l'application n'a pas demandé à établir une connexion, l'algorithme passe à l'étape E82 qui consiste à effacer le numéro précédemment reçu à l'étape E80.

Cette opération effectuée, le processeur 54 du dispositif d'émission esclave 50a retourne à l'étape E80 et attend la réception d'un nouveau numéro.

Si un paquet doit être transmis, l'algorithme passe à l'étape E83 et le contrôleur 54 du dispositif d'émission esclave 50b, insère à l'étape E83 un identifiant de paquet, plus précisément le numéro précédemment reçu à l'étape E80 dans le paquet à transmettre.

Cet identifiant inséré, le contrôleur 54 du dispositif d'émission esclave 50b transfère ensuite, à l'étape E84, le paquet identifié à destination du dispositif de réception esclave 50d sur le réseau 100 par l'intermédiaire de la carte d'interface réseau 51 du dispositif d'émission esclave 50c

Cette opération effectuée, l'algorithme retourne à l'étape E80 et attend la réception d'un nouveau numéro.

La **Fig. 9** représente l'algorithme mis en oeuvre dans un dispositif de réception maître 50c selon le second mode de réalisation de l'invention.

A la mise sous tension du dispositif de réception, et plus particulièrement dans le cas d'une utilisation d'un ordinateur comme dispositif de réception, le processeur lit à partir de la mémoire morte de l'ordinateur ou d'un support d'informations tel qu'un disque compact CD-ROM, les instructions du programme correspondant aux étapes E91 à E96 de la Fig. 9 et les charge en mémoire vive RAM pour les exécuter.

L'étape E91 de l'algorithme de la Fig. 9 consiste en la réception d'un paquet provenant du réseau 100 par la carte réseau 51. A la réception d'un paquet, le contrôleur 54 du dispositif de réception maître 50c obtient une information prédéterminée à partir d'au moins une partie des données contenues dans le paquet. Plus précisément, à l'étape E92, il extrait du paquet reçu le numéro inséré par le dispositif d'émission maître 50a.

Ensuite, à l'étape E93, le contrôleur 54 du dispositif de réception maître 50c génère un message représentatif de l'information prédéterminée à destination d'au moins un autre dispositif. Plus précisément, il transfère le numéro précédemment extrait au (x) dispositif (s) de réception esclave (s) 50d par l'intermédiaire de la liaison 60b.

Le message généré, le contrôleur du dispositif de réception maître 50c passe à l'étape E94 qui est une boucle d'attente de réception d'un message d'autorisation/refus du (des) dispositif (s) de réception esclave (s) 50d par l'intermédiaire de la liaison 60b.

Ce message d'autorisation/refus sera décrit ultérieurement en référence à la Fig. 10.

Si un dispositif de réception esclave 50d a envoyé un message de refus, le contrôleur 54 du dispositif de réception maître 50c efface à l'étape E95 le numéro extrait et ne stocke pas dans son buffer 52 le paquet dans lequel ce numéro était inséré.

Si tous les dispositifs de réception esclaves 50d ont envoyé un message d'autorisation, le contrôleur 54 du dispositif de réception maître 50c stocke à l'étape E96 le paquet dans lequel ce numéro était inséré dans la mémoire temporaire 52.

Il est à remarquer que ce message d'autorisation peut être associé à une requête de passage à un mode suppression par sous-échantillonnage ou concaténation. S'il est associé à une requête de suppression, préalablement au stockage du paquet, le contrôleur du dispositif de réception maître 50c sous-échantillonne ou concatène celui-ci.

Dans une variante non représentée en Fig. 9, le dispositif de réception maître 50c à la suite de l'étape E96 génère un message à destination des dispositifs de réception esclaves 50d les informant qu'ils doivent eux aussi stocker le paquet.

Ainsi, le dispositif de réception maître 50c traite le second paquet en fonction de la réponse du dispositif de réception esclave 50d au message précédemment envoyé à l'étape E93.

Il est à remarquer qu'en variante, avant de stocker le paquet reçu, le contrôleur 54 du dispositif de réception maître 50c exécute les étapes E32 à E38 de l'algorithme de la Fig. 3 précédemment décrites pour le traitement du paquet à stocker.

Bien entendu, dans ce cas, le dispositif de réception esclave 50d exécute les étapes correspondantes de l'algorithme décrit en référence à la Fig. 4.

Ceci effectué, le contrôleur 54 du dispositif de réception maître 50c repasse à l'étape E91 et attend un nouveau paquet.

La Fig. 10 représente l'algorithme mis en oeuvre dans un dispositif de réception esclave 50d selon le second mode de réalisation de l'invention.

A la mise sous tension du dispositif de réception, et plus particulièrement dans le cas d'une utilisation d'un ordinateur comme dispositif de réception, le processeur lit à partir de la mémoire morte de l'ordinateur ou d'un support d'informations tel qu'un disque compact CD-ROM, les instructions du programme correspondant aux étapes E100 à E112 de la Fig. 10 et les charge en mémoire vive RAM pour les exécuter.

La première étape E100 de l'algorithme consiste en l'attente de la réception par l'intermédiaire de sa liaison 60b avec le dispositif de réception maître 50c d'un numéro extrait par celui-ci dans un paquet de données.

A la réception de ce numéro, le contrôleur 54 du dispositif de réception 50d vérifie à l'étape E101 si un paquet est présent dans la carte réseau reliée au réseau 100.

Dans la négative, le contrôleur 54 du dispositif de réception esclave 50d génère à l'étape E102 un message à destination du dispositif de réception maître 50c par l'intermédiaire de la liaison avec celui-ci 60b l'informant du refus de ce numéro. Ce refus correspond au message attendu à l'étape E94 décrite en référence à la Fig. 9.

Le numéro précédemment reçu à l'étape E100 est effacé et l'algorithme retourne à l'étape E100 déjà décrite.

Dans l'affirmative, le contrôleur 54 du dispositif de réception esclave 50d, à l'étape E103, extrait ou lit le numéro inséré dans le paquet qu'il a reçu du dispositif d'émission esclave 50b par l'intermédiaire du réseau 100.

Ce numéro obtenu, à l'étape E104, le contrôleur 54 du dispositif de réception esclave 50d vérifie si ce numéro est égal au numéro transmis par le dispositif de réception maître 50c.

Dans l'affirmative, le paquet est stocké à l'étape E105 dans la mémoire temporaire du dispositif de réception esclave 50d.

Cette opération effectuée, le contrôleur 54 du dispositif de réception esclave 50d envoie, à l'étape E106, un message d'autorisation à destination du dispositif de réception maître 50c. Cette autorisation correspond au message attendu à l'étape E94 décrite en référence à la Fig. 9.

Finalement, le contrôleur 54 du dispositif de réception esclave 50d retourne à l'étape E100 pour attendre un nouveau numéro.

Si le numéro extrait est différent du numéro transmis par le dispositif de réception maître 50c, l'algorithme passe à l'étape E107 qui consiste à vérifier si le numéro transmis par le dispositif de réception maître 50c est supérieur au numéro obtenu à l'étape E103.

Dans l'affirmative, le contrôleur 54 du dispositif de réception esclave 50d stocke le paquet reçu dans sa mémoire temporaire à l'étape E110, et envoie un message à l'étape E111, à destination du dispositif de réception maître 50c, d'autorisation qui en outre informe le dispositif de réception maître 50c de passer dans le mode suppression, sous-échantillonnage ou concaténation.

Cette autorisation correspond au message attendu à l'étape E94 décrite en référence à la Fig. 9.

Finalement, le contrôleur 54 du dispositif de réception esclave 50d retourne à l'étape E100 pour attendre un nouveau numéro.

Si le numéro transmis par le dispositif de réception maître 50c est inférieur au numéro obtenu à l'étape E103, le contrôleur 54 du dispositif de réception esclave 50d passe à l'étape E108 dans le mode suppression, en sous-échantillonnant ou en concaténant le paquet.

A l'étape E109, le contrôleur 54 du dispositif de réception esclave 50d stocke le paquet modifié à l'étape E108 dans sa mémoire temporaire 52 et envoie un message, à l'étape E112, d'autorisation à destination du dispositif de réception maître 50c. Cette autorisation correspond au message attendu à l'étape E94 décrite en référence à la Fig. 9.

Finalement, le contrôleur 54 du dispositif de réception esclave 50d retourne à l'étape E100 pour attendre un nouveau numéro.

Il est à remarquer selon une variante, avant de stocker le paquet reçu correspondant aux étapes E105 et E110, le contrôleur 54 du dispositif de réception esclave 50d exécute les étapes E32 à E38 de l'algorithme de la Fig. 3 précédemment décrites pour le traitement du paquet à stocker.

Bien entendu, dans ce cas, le dispositif de réception maître 50c exécutera les étapes correspondantes de l'algorithme décrites en référence à la Fig. 4.

L'invention telle que décrite dans une application dans laquelle des données représentatives de signal audio sont transmises sur un réseau asynchrone est aussi applicable dans de multiples domaines.

A titre d'exemple et de manière non limitative, l'invention peut être utilisée pour des applications telles que les jeux vidéo en réseau. Dans ce cas, les informations contenant des données utiles seront par exemple des informations représentatives de déplacements importants dans la scène du jeu. Des déplacements moindres voire les modifications de texture des objets contenus dans la scène du jeu sont alors considérés comme équivalents à des informations de silence.

L'invention peut aussi être utilisée dans le cas de récepteurs multiples pour synchroniser les informations reçues. En unifiant les traitements effectués par tous les récepteurs, les décalages importants entre utilisateurs sont réduits. Ceci peut par exemple être le cas pour des systèmes de vente par enchères sur le réseau Internet. Dans ce cas, les informations contenant des données utiles seront par exemple des informations représentatives d'augmentation d'enchères. D'autres informations moins essentielles telles que des animations de l'interface graphique sont alors considérées comme équivalentes à des informations de silence.

## Revendications

1. Procédé de traitement d'un paquet d'un flux de données (10b, 50c) reçu par l'intermédiaire d'un réseau de communication (100) par un dispositif de réception pour la gestion d'un moyen de mémorisation temporaire (12, 52), **caractérisé en ce que** le procédé exécute, à la réception d'au moins un paquet de données, les étapes de :
- obtention (E34) d'une information prédéterminée à partir d'au moins une partie des données contenues dans un paquet reçu,
- génération (E35, E38) d'un message représentatif de l'information prédéterminée à destination d'au moins un autre dispositif de réception de données recevant le même flux,
- stockage ou non (E37, E39, E40) de tout ou partie du paquet reçu dans le moyen de mémorisation temporaire en fonction de la réponse au message reçue du ou des autres dispositifs de réception de données recevant le même flux.

2. Procédé de traitement selon la revendication 1, **caractérisé en ce que** préalablement à l'étape d'obtention, le procédé comporte une étape de comparaison (E32) de la quantité d'informations contenues dans le moyen de mémorisation temporaire à un seuil prédéterminé.

3. Procédé de traitement selon la revendication 1 ou 2, **caractérisé en ce que** le flux de données est un flux de données audio comprenant des données utiles et des données représentatives de silence et que l'information prédéterminée est la présence ou non de silence dans le paquet reçu.

4. Procédé de traitement selon la revendication 3, **caractérisé en ce que** la réponse d'un ou de chaque autre dispositif de réception est représentative de la présence de données utiles ou de données représentatives de silence dans le dernier paquet reçu par ledit autre dispositif de réception.

5. Procédé de traitement selon la revendication 4, **caractérisé en ce que** si la réponse reçue de chacun des autres dispositifs de réception est représentative de la présence de données représentatives de silence, le procédé ne stocke pas (E37) le paquet reçu dans ledit moyen de mémorisation temporaire.

6. Procédé de traitement selon la revendication 4, **caractérisé en ce que** si la réponse reçue d'au moins un autre dispositif de réception n'est pas représentative de la présence de données représentatives de silence, le procédé comporte les étapes de concaténation et/ou d'échantillonnage du paquet reçu (E39), de stockage (E40) du paquet concaténé et/ou échantillonné dans ledit moyen de mémorisation temporaire et de génération (E38) d'un message de demande de concaténation et/ou d'échantillonnage à destination des autres dispositifs.

7. Procédé de traitement selon l'une quelconque des revendications 1 à 6, **caractérisé en ce que** l'information prédéterminée est obtenue en déterminant l'énergie du signal audio contenu dans le paquet et en comparant l'énergie déterminée avec une moyenne des énergies des signaux audio contenues dans les paquets précédemment reçus.

8. Procédé de traitement selon l'une quelconque des revendications 1 à 6, **caractérisé en ce que** l'information prédéterminée est obtenue en détectant dans le paquet reçu la présence d'une information prédéterminée représentative de la présence de données représentatives de silence dans ledit paquet.

9. Procédé de traitement selon la revendication 1, **caractérisé en ce que** l'information prédéterminée est un numéro de paquet.

10. Procédé de traitement selon la revendication 9, **caractérisé en ce que** la réponse d'un autre dispositif est représentative de la réception d'un paquet par l'autre dispositif de réception et/ou d'une comparaison du numéro de paquet avec un numéro de paquet obtenu par l'autre dispositif de réception à partir du paquet reçu (E101, E 104).

11. Procédé de traitement selon la revendication 10, **caractérisé en ce que** :
- si la réponse est représentative de la non réception d'un paquet par l'autre dispositif de réception, le procédé ne stocke pas le paquet reçu (E95),
- si la réponse est représentative de la réception d'un paquet par l'autre dispositif de réception, le procédé stocke au moins une partie du paquet reçu dans ledit moyen de mémorisation temporaire (E96).

12. Procédé de traitement d'un paquet d'un flux de données (10b, 50c) reçu par l'intermédiaire d'un réseau de communication (100) par un dispositif de réception pour la gestion d'un moyen de mémorisation temporaire (12, 52), **caractérisé en ce que** le procédé comporte les étapes de :
- réception (E400) d'un message d'un autre dispositif de réception du même flux de données, le message étant représentatif d'une information prédéterminée obtenue à partir d'au moins une partie des données contenues dans un paquet reçu par cet autre dispositif de réception,
- obtention (E401) d'informations représentatives de la réception d'un paquet reçu et/ou du contenu dudit paquet reçu par le dispositif de réception du flux de données,
- génération (E402, E403) d'un message à destination de l'autre dispositif à partir des informations obtenues,
- stockage ou non (E406, E407) de tout ou partie du paquet reçu dans un moyen de mémorisation temporaire du dispositif de réception si le dispositif de réception a reçu un paquet.

13. Procédé de traitement selon la revendication 12, **caractérisé en ce que** le flux de données est un flux de données audio comprenant des données utiles et des données représentatives de silence et que les informations représentatives du contenu du paquet sont la présence ou non dans le paquet reçu de silence.

14. Procédé de traitement selon la revendication 13, **caractérisé en ce que** le message représentatif d'une information prédéterminée issu de l'autre dispositif de réception est représentatif de la présence de données utiles ou de données représentatives de silence dans le dernier paquet reçu par l'autre dispositif de réception.

15. Procédé de traitement selon la revendication 14, **caractérisé en ce qu'**à la réception d'un message de demande de concaténation (E404) et/ou d'échantillonnage par l'autre dispositif de réception, le procédé comporte les étapes de concaténation et/ou échantillonnage du paquet reçu (E405), stockage (E406) du paquet concaténé et/ou échantillonné dans ledit moyen de mémorisation temporaire.

16. Procédé selon la revendication 12, **caractérisé en ce que** l'information prédéterminée reçue est un numéro de paquet, les informations obtenues sont la présence ou non d'un paquet reçu (E101) et si présence d'un paquet, d'un numéro de paquet obtenu à partir du paquet reçu (E103) et **en ce que** le message généré (E 106, E111, E112) est fonction du numéro de paquet reçu et des informations obtenues.

17. Procédé selon la revendication 16, **caractérisé en ce que** :
- si le numéro de paquet reçu est supérieur ou égal au numéro de paquet obtenu à partir du paquet reçu, le paquet reçu est stocké dans le moyen de mémorisation temporaire (E105, E110),
- sinon, le paquet reçu est concaténé et/ou échantillonné le paquet reçu et stocké le paquet concaténé dans le moyen de mémorisation temporaire (E108, E109).

18. Procédé selon l'une quelconque des revendications 1 à 17, **caractérisé en ce que** le flux de données est émis par une pluralité de dispositifs émetteurs à travers le réseau de communication, et **en ce que** le procédé effectue, au niveau d'un des dispositifs émetteurs dit dispositif d'émission maître, les étapes de :
- marquage de chaque paquet (E72) par un identifiant,
- transmission du paquet marqué (E73),
- transfert (E74) de l'identifiant aux autres dispositifs émetteurs.

19. Procédé selon la revendication 18, **caractérisé en ce que** les autres dispositifs émetteurs marquent (E83) les paquets qu'ils ont à transmettre avec les identifiants transférés par le dispositif d'émission maître.

20. Programme d'ordinateur stocké sur un support d'informations, ledit programme comportant des instructions permettant de mettre en oeuvre le procédé de traitement selon l'une quelconque des revendications 1 à 11, lorsqu'il est chargé et exécuté par un système informatique.

21. Programme d'ordinateur stocké sur un support d'informations, ledit programme comportant des instructions permettant de mettre en oeuvre le procédé de traitement selon l'une quelconque des revendications 12 à 17, lorsqu'il est chargé et exécuté par un système informatique.

22. Dispositif de traitement (10, 50) d'un paquet d'un flux de données (10b, 50c) reçu par l'intermédiaire d'un réseau de communication (100) par un dispositif de réception pour la gestion d'un moyen de mémorisation temporaire (12, 52), **caractérisé en ce que** le dispositif comporte :
- des moyens (14, 54) pour obtenir une information prédéterminée à partir d'au moins une partie des données contenues dans un paquet reçu,
- des moyens (11, 55) pour générer un message représentatif de l'information prédéterminée à destination d'au moins un autre dispositif de réception recevant le même flux de données,
- des moyens (14, 54) pour stocker ou non tout ou partie du paquet reçu dans le moyen de mémorisation temporaire en fonction de la réponse au message de l'autre dispositif de réception de données recevant le même flux.

23. Dispositif de traitement (10, 50) d'un paquet d'un flux de données (10b, 50c) reçu par l'intermédiaire d'un réseau de communication (100) par un dispositif de réception pour la gestion d'un moyen de mémorisation temporaire (12, 52), **caractérisé en ce que** le dispositif comporte :
- des moyens (11, 55) pour recevoir un message d'un autre dispositif de réception du même flux de données, le message étant représentatif d'une information prédéterminée obtenue à partir d'au moins une partie des données contenues dans un paquet reçu par cet autre dispositif de réception,
- des moyens (14) pour obtenir des informations représentatives de la réception d'un paquet qu'il a reçu et/ou du contenu dudit paquet reçu par le dispositif de réception du flux de données,
- des moyens (11, 55) pour générer un message à destination de l'autre dispositif à partir des informations obtenues,
- des moyens pour stocker ou non tout ou partie du paquet reçu dans un moyen de mémorisation temporaire du dispositif de réception.

24. Système de transmission d'un flux de données (10b, 50c) par une pluralité de dispositifs émetteurs à travers un réseau de communication (100) à destination d'au moins deux dispositifs de réception pour la gestion d'un moyen de mémorisation temporaire (12, 52), le flux étant sous forme de paquets de données, **caractérisé en ce qu'**un des dispositifs émetteurs dit dispositif d'émission maître (50a) comporte :
- des moyens de marquage de chaque paquet par un identifiant respectif,
- des moyens de transmission du paquet marqué,
- des moyens de transfert de l'identifiant aux autres dispositifs émetteurs (50b),
et **en ce qu'**un dispositif de réception comporte :
- des moyens (14, 54) pour obtenir une information prédéterminée à partir d'au moins une partie des données contenues dans un paquet reçu,
- des moyens (11, 55) pour générer un message représentatif de l'information prédéterminée à destination d'au moins un autre dispositif de réception recevant le même flux de données,
- des moyens (14, 54) pour stocker ou non tout ou partie du paquet reçu dans le moyen de mémorisation temporaire en fonction de la réponse au message de l'autre dispositif de réception de données recevant le même flux.

25. Système selon la revendication 24, **caractérisé en ce que** les autres dispositifs émetteurs (50b) marquent les paquets qu'ils ont à transmettre avec les identifiants transférés par le dispositif d'émission maître.

## Claims

1. Method of processing a packet of a data flow (10b, 50c) received through a communication network (100) by a receiving device for the management of a temporary storage device (12, 52), **characterised in that**, on receipt of at least one data packet, the method comprises the steps of :
- obtaining (E34) a predetermined information from at least one part of the data contained in a received packet,
- generating (E35, E38) a message representative of the predetermined information to at least one other data receiving device receiving the same flow,
- storing or not storing (E37, E39, E40) all or part of the received packet in the temporary storage means according to the response to the message received from the at least one other data receiving device or devices receiving the same flow.

2. Method according to claim 1, **characterised in that** prior to the step of obtaining, the method comprises a step of comparing (E32) the amount of information contained in the temporary storage means to a predetermined threshold.

3. Method according to claim 1 or 2, **characterised in that** the data flow is an audio data flow including useful data and data representing silence and **in that** the predetermined information is the presence or not of silence in the received packet.

4. Method according to claim 3, **characterised in that** the response of the at least one other receiving device is representative of the presence of useful data or of data representing silence in the last packet received by the said other receiving device.

5. Method according to claim 4, **characterised in that** if the response received from the at least one other receiving device is representative of the presence of data representing silence, the received packet is not stored in the said temporary storage means.

6. Method according to claim 4, **characterised in that** if the response received from the at least one other receiving device is not representative of the presence of data representing silence, the method comprises the steps of concatenating and/or sampling the packet received (E39), for storing (E40) the concatenated and/or the sampled packet in the said temporary storage means and generating (E38) a concatenation and/or sampling message request intended for the other devices.

7. Method according to any one of claims 1 to 6, **characterised in that** the predetermined information is obtained by determining the power of the audio signal contained in the packet and by comparing the determined power with a mean of the power of the audio signals contained in the packets previously received.

8. Method according to any one of claims 1 to 6, **characterised in that** the predetermined information is obtained by detecting, in the received packet, the presence of predetermined information representative of the presence of data representing silence in the said packet.

9. Method according to claim 1, **characterised in that** the predetermined information is a packet number.

10. Method according to claim 9, **characterised in that** the response from another device is representative of the receipt of a packet by the other receiving device and/or of a comparison between the packet number and a packet number obtained by the other receiving device from the packet received (E101, E104).

11. Method according to claim 10, **characterised in that**:
- if the response is representative of the non receipt of a packet by the other receiving device, the received packet (E95) is not stored,
- if the response is representative of the receipt of a packet by the other receiving device, the at least one part of the received packet is stored in the said temporary storage means (E96).

12. Method of processing a packet of a data flow (10b, 50c) received through a communication network (100) by a receiving device for the management of a temporary storage means (12, 52), **characterised in that** the method comprises the steps of:
- receiving (E400) a message from another device receiving the same data flow, the message being representative of predetermined information obtained from at least one part of the data contained in a packet received by the other receiving device,
- obtaining (E401) information representative of the receipt of a received packet and/or of the contents of the said packet received by the device receiving the data flow,
- generating (E402, E403) a message for the other device from the information obtained,
- storing or not storing (E406, E407) all or part of the received packet in a temporary storage means of the receiving device if the receiving device has received a packet.

13. Method according to claim 12, **characterised in that** the data flow is an audio data flow including useful data and data representing silence and that the information representing the contents of the packet is the presence or not of silence in the received packet.

14. Method according to claim 13, **characterised in that** the message representing predetermined information sent by the other receiving device is representative of the presence of useful data or of data representing silence in the last received packet by the other receiving device.

15. Method according to claim 14, **characterised in that** on receipt of a concatenation (E404) and/or sampling request message by the other receiving device, the method comprises the steps of concatenating and/or sampling of the received packet (E405) and storing (E406) the concatenated and/or sampled packet in the said temporary storage means.

16. Method according to claim 12, **characterised in that** the predetermined information received is a packet number, the information obtained is the presence or not of a packet received (E101) and if there is presence of a packet, of a packet number obtained from the packet received (E103) and **in that** the message generated (E106, E111, E112) is a function of the packet number received and of the information obtained.

17. Method according to claim 16, **characterised in that**:
- if the packet number received is in excess of or equal to the packet number obtained from the packet received, the received packet is stored in the temporary storage means (E105, E110),
- if not, the packet received is concatenated and/or sampled, the packet received and the concatenated packet stored in the temporary storage means (E108, E109).

18. Method according to any one of the claims 1 to 17, **characterised in that** the data flow is transmitted by a plurality of transmitting devices across the communication network, and **in that**, at the level of one of the transmitting devices called the master transmission device, the process carries out the steps of:
- marking each packet (E72) by an identifier,
- transmitting the marked packet (E73),
- transferring (E74) the identifier to the other transmitting devices.

19. Method according to claim 18, **characterised in that** the other transmitting devices mark (E83) the packets that they have to transmit with the identifiers transferred by the master transmission device.

20. Computer program stored on an information carrier, the said program including instructions enabling the method of processing to be implemented according to any one of the claims 1 to 11, when it is loaded and executed by an information processing system.

21. Computer program stored on an information carrier, the said program including instructions enabling the method of processing to be implemented according to any one of the claims 12 to 17, when it is loaded and executed by an information processing system.

22. Device for processing (10, 50) a packet of a data flow (10b, 50c) received through a communication network (100) by a receiving device for the management of a temporary storage means (12, 52), **characterised in that** the device comprises:
- means (14, 54) for obtaining predetermined information from at least one part of the data contained in a received packet,
- means (11, 55) for generating a message representing the predetermined information to at least one other receiving device receiving the same data flow,
- means (14, 54) for storing or not storing all or part of the received packet in the temporary storage means in accordance with the response to the message from the other data receiving device receiving the same flow.

23. Device for processing (10, 50) a packet of a data flow (10b, 50c) received through a communication network (100) by a receiving device for the management of a temporary storage means (12, 52), **characterised in that** the device comprises:
- means (11, 55) for receiving a message from another device receiving the same data flow, the message being representative of predetermined information obtained from at least one part of the data contained in a packet received by this other receiving device,
- means (14) for obtaining the information representative of the receipt of a packet that it has received and/or of the contents of the said packet received by the device receiving the data flow,
- means (11, 55) for generating a message to the other device from the obtained information,
- means for storing or not storing all or part of the packet received in a temporary storage means of the receiving device.

24. System for transmitting a data flow (10b, 50c) by a plurality of transmitting devices across a communication network (100), said data flow being intended for at least two receiving devices for the management of a temporary storage device (12, 52), the flow being in the form of data packets, **characterised in that** one of the transmitting devices, called the master transmission device (50a), comprises:
- means for marking each packet by a respective identifier,
- means for transmitting the marked packet,
- means for transferring the identifier to the other transmitting devices (50b),
and **in that** a receiving device comprises:
- means (14, 54) for obtaining predetermined information from at least one part of the data contained in a packet received,
- means (11, 55) for generating a message representative of the predetermined information to at least one other receiving device receiving the same data flow,
- means (14, 54) for storing or not storing all or part of the packet received in the temporary storage means in accordance with the response to the message from the other data receiving device receiving the same flow.

25. System according to claim 24, **characterised in that** the other transmitting devices (50b) mark the packets that they have to transmit with the identifiers transferred by the master transmission device.

## Patentansprüche

1. Verfahren zur Verarbeitung eines Pakets eines Stroms von Daten (10b, 50c), der über ein Kommunikationsnetz (100) von einer Empfangsvorrichtung für die Verwaltung eines Mittels zum vorübergehenden Speichern (12, 52) empfangen wird, **dadurch gekennzeichnet, dass** das Verfahren beim Empfang mindestens eines Datenpakets die folgenden Schritte ausführt:
- Erzielen (E34) einer vorausbestimmten Information ausgehend von mindestens einem Teil der Daten, die in einem empfangenen Paket enthalten sind,
- Erzeugen (E35, E38) einer Meldung, die für die vorausbestimmte Information repräsentativ ist, zu mindestens einer anderen Datenempfangsvorrichtung, die den gleichen Strom empfängt,
- Speichern oder nicht (E37, E39, E40) alles oder eines Teils des empfangenen Pakets in dem Mittel zum vorübergehenden Speichern in Abhängigkeit von der Antwort auf die von der/den anderen Datenempfangsvorrichtung(en), die den gleichen Strom empfangen, empfangenen Meldung.

2. Verfahren zur Verarbeitung nach Anspruch 1, **dadurch gekennzeichnet, dass** das Verfahren vor dem Schritt des Erzielens einen Schritt des Vergleichens (E32) der Menge von Informationen, die in dem Mittel zum vorübergehenden Speichern enthalten sind, mit einem vorausbestimmten Schwellenwert umfasst.

3. Verfahren zur Verarbeitung nach Anspruch 1 oder 2, **dadurch gekennzeichnet, dass** der Datenstrom ein Audiodatenstrom ist, der Nutzdaten und Daten, die Pausen darstellen, umfasst, und dass die vorausbestimmte Information die Gegenwart oder nicht einer Pause in dem empfangenen Paket ist.

4. Verfahren zur Verarbeitung nach Anspruch 3, **dadurch gekennzeichnet, dass** die Antwort einer oder jeder anderen Empfangsvorrichtung(en) für die Gegenwart von Nutzdaten oder von Daten, die eine Pause darstellen, in dem letzten von der anderen Empfangsvorrichtung empfangenen Paket repräsentativ ist.

5. Verfahren zur Verarbeitung nach Anspruch 4, **dadurch gekennzeichnet, dass**, wenn die Antwort, die von jeder der anderen Empfangsvorrichtungen empfangen wird, für die Gegenwart von Daten, die eine Pause darstellen, repräsentativ ist, das Verfahren das empfangene Paket nicht (E37) in dem Mittel zum vorübergehenden Speichern speichert.

6. Verfahren zur Verarbeitung nach Anspruch 4, **dadurch gekennzeichnet, dass**, wenn die Antwort, die von mindestens einer anderen Empfangsvorrichtung empfangen wird, nicht für die Gegenwart von Daten, die eine Pause darstellen, repräsentativ ist, das Verfahren die Schritte der Konkatenation und/oder des Abtastens des empfangenen Pakets (E39), des Speicherns (E40) des konkatenierten und/oder abgetasteten Pakets in dem Mittel zur vorübergehenden Speicherung und das Erzeugen (E38) einer Anfragemeldung um Konkatenation und/oder Abtasten in Richtung der anderen Vorrichtungen umfasst.

7. Verfahren zur Verarbeitung nach einem der Ansprüche 1 bis 6, **dadurch gekennzeichnet, dass** die vorausbestimmte Information erzielt wird, indem die Energie des Audiosignals bestimmt wird, das in dem Paket enthalten ist, und indem die bestimmte Energie mit einem Durchschnitt der Energien der Audiosignale, die in den zuvor empfangenen Paketen enthalten sind, verglichen wird.

8. Verfahren zur Verarbeitung nach einem der Ansprüche 1 bis 6, **dadurch gekennzeichnet, dass** die vorausbestimmte Information erzielt wird, indem in dem empfangenen Paket die Gegenwart einer vorausbestimmten Information erfasst wird, die für die Gegenwart von Daten repräsentativ ist, die für eine Pause in dem Paket repräsentativ sind.

9. Verfahren zur Verarbeitung nach Anspruch 1, **dadurch gekennzeichnet, dass** die vorausbestimmte Information eine Paketnummer ist.

10. Verfahren zur Verarbeitung nach Anspruch 9, **dadurch gekennzeichnet, dass** die Antwort einer anderen Vorrichtung für den Empfang eines Pakets durch die andere Empfangsvorrichtung und/oder einen Vergleich der Paketnummer mit einer Paketnummer, die von der anderen Empfangsvorrichtung ausgehend von dem empfangenen Paket erzielt wurde (E101, E104), repräsentativ ist.

11. Verfahren zur Verarbeitung nach Anspruch 10, **dadurch gekennzeichnet, dass**:
- wenn die Antwort für den Nichtempfang eines Pakets durch die andere Empfangsvorrichtung repräsentativ ist, das Verfahren das empfangene Paket nicht speichert(E95),
- wenn die Antwort für den Empfang eines Pakets durch die andere Empfangsvorrichtung repräsentativ ist, das Verfahren mindestens einen Teil des empfangenen Pakets in dem Mittel zur vorübergehenden Speicherung speichert (E96).

12. Verfahren zur Verarbeitung eines Pakets eines Datenstroms (10b, 50c), der über ein Kommunikationsnetz (100) von einer Empfangsvorrichtung für die Verwaltung eines Mittels zum vorübergehenden Speichen (12, 52) empfangen wird, **dadurch gekennzeichnet, dass** das Verfahren die folgenden Schritte umfasst:
- Empfang (E400) einer Meldung einer anderen Empfangsvorrichtung des gleichen Datenstroms, wobei die Meldung für eine vorausbestimmte Information repräsentativ ist, die ausgehend von mindestens einem Teil der Daten erzielt wird, die in einem von dieser anderen Empfangsvorrichtung empfangenen Paket enthalten sind,
- Erzielen (E401) von Informationen, die für den Empfang eines empfangenen Pakets und/oder den Inhalt des durch die Empfangsvorrichtung des Datenstroms empfangenen Pakets repräsentativ sind,
- Erzeugen (E402, E403) einer Meldung zu der anderen Vorrichtung ausgehend von den erzielten Daten,
- Speichern oder nicht (E406, E407) alles oder eines Teils des empfangenen Pakets in einem Mittel zum vorübergehenden Speichern der Empfangsvorrichtung, wenn die Empfangsvorrichtung ein Paket empfangen hat.

13. Verfahren zur Verarbeitung nach Anspruch 12, **dadurch gekennzeichnet, dass** der Datenstrom ein Audiodatenstrom ist, der Nutzdaten und Daten enthält, die für eine Pause repräsentativ sind, und dass die für den Inhalt des Pakets repräsentativen Informationen die Gegenwart oder nicht einer Pause in dem empfangenen Paket ist.

14. Verfahren zur Verarbeitung nach Anspruch 13, **dadurch gekennzeichnet, dass** die Meldung, die für eine vorausbestimmte Information repräsentativ ist, die aus der anderen Empfangsvorrichtung hervorgeht, für die Gegenwart von Nutzdaten oder von Daten repräsentativ ist, die für eine Pause in dem letzten von der anderen Empfangsvorrichtung empfangenen Paket repräsentativ sind.

15. Verfahren zur Verarbeitung nach Anspruch 14, **dadurch gekennzeichnet, dass** beim Empfang einer Meldung zur Konkatenationsanfrage (E404) und/oder zum Abtasten durch die andere Empfangsvorrichtung das Verfahren die Schritte der Konkatenation und/oder des Abtastens des empfangenen Pakets (E405), des Speicherns (E406) des konkatenierten und/oder abgetasteten Pakets in dem Mittel zum vorübergehenden Speichern enthält.

16. Verfahren nach Anspruch 12, **dadurch gekennzeichnet, dass** die vorausbestimmte empfangene Information eine Paketnummer ist, die erzielten Informationen die Gegenwart oder nicht eines empfangenen Pakets (E101) sind, und bei Gegenwart eines Pakets, einer Paketnummer, die ausgehend von dem empfangenen Paket (E103) erzielt wird, und **dadurch**, dass die erzeugte Meldung (E106, E111, E112) von der empfangenen Paketnummer und den erzielten Informationen abhängt.

17. Verfahren nach Anspruch 16, **dadurch gekennzeichnet, dass**:
- wenn die empfangene Paketnummer größer oder gleich der Nummer des Pakets ist, die ausgehend von dem empfangenen Paket erzielt wurde, das empfangene Paket in dem Mittel zum vorübergehenden Speichern gespeichert wird (E105, E110),
- anderenfalls das empfangene Paket konkateniert und/oder abgetastet wird, und das konkatenierte Paket in dem Mittel zum vorübergehenden Speichern gespeichert wird (E108, E109).

18. Verfahren nach einem der Ansprüche 1 bis 17, **dadurch gekennzeichnet, dass** der Datenstrom von einer Vielzahl von Sendevorrichtungen durch das Kommunikationsnetz gesendet wird, und dass das Verfahren auf der Ebene einer der Sendevorrichtungen, Hauptsendevorrichtung genannt, die folgenden Schritte durchführt:
- Kennzeichnen jedes Pakets (E72) durch einen Identifikator,
- Übertragen des **gekennzeichneten** Pakets (E73),
- Transfer (E74) des Identifikators zu den anderen Sendevorrichtungen.

19. Verfahren nach Anspruch 18, **dadurch gekennzeichnet, dass** die anderen Sendevorrichtungen die Pakete, die sie zu übertragen haben, mit den Identifikatoren kennzeichnen (E83), die durch die Hauptsendevorrichtung transferiert werden.

20. Computerprogramm, das auf einem Datenträger gespeichert ist, wobei das Programm Anweisungen enthält, die es erlauben, das Verarbeitungsverfahren gemäß einem der Ansprüche 1 bis 11 durchzuführen, wenn es von einem EDV-System geladen und ausgeführt wird.

21. Computerprogramm, das auf einem Datenträger gespeichert ist, wobei das Programm Anweisungen enthält, die es erlauben, das Verarbeitungsverfahren nach einem der Ansprüche 12 bis 17 durchzuführen, wenn es von einem EDV-System geladen und ausgeführt wird.

22. Vorrichtung zum Verarbeiten (10, 50) eines Pakets von Datenströmen (10b, 50c), das über ein Kommunikationsnetz (100) von einer Empfangsvorrichtung für die Verwaltung eines Mittels zum vorübergehenden Speichern (12, 52) empfangen wird, **dadurch gekennzeichnet, dass** die Vorrichtung Folgendes umfasst:
- Mittel (14, 54), um eine vorausbestimmte Information ausgehend von mindestens einem Teil der in einem empfangenen Paket enthaltenen Daten zu erzielen,
- Mittel (11, 55), um eine Meldung, die für die vorausbestimmte Information repräsentativ ist, zumindest zu einer anderen Empfangsvorrichtung, die den gleichen Datenstrom empfängt, zu erzeugen,
- Mittel (14, 54) zum Speichern oder nicht alles oder eines Teils des empfangenen Pakets in dem Mittel zum vorübergehenden Speichern in Abhängigkeit von der Antwort auf die Meldung der anderen Datenempfangsvorrichtung, die den gleichen Strom empfängt.

23. Vorrichtung zum Verarbeiten (10, 50) eines Pakets eines Datenstroms (10b, 50c), der über ein Kommunikationsnetz (100) von einer Empfangsvorrichtung für die Verwaltung eines Mittels zum vorübergehenden Speichern (12, 52) empfangen wird, **dadurch gekennzeichnet, dass** die Vorrichtung Folgendes umfasst:
- Mittel (11, 55), um eine Meldung einer anderen Empfangsvorrichtung des gleichen Datenstroms zu empfangen, wobei die Meldung für eine vorausbestimmte Information repräsentativ ist, die ausgehend von mindestens einem Teil der Daten erzielt wird, die in einem Paket enthalten sind, das von dieser anderen Empfangsvorrichtung empfangen wird,
- Mittel (14), um Informationen zu erzielen, die für den Empfang eines Pakets, das sie empfangen hat und/oder den Inhalt des durch die Empfangsvorrichtung des Datenstroms empfangenen Pakets repräsentativ sind,
- Mittel (11, 55) zum Erzeugen einer Meldung zu der anderen Vorrichtung ausgehend von den erzielten Informationen,
- Mittel zum Speichern oder nicht alles oder eines Teils des empfangenen Pakets in einem Mittel zum vorübergehenden Speichern der Empfangsvorrichtung.

24. System zum Übertragen eines Datenstroms (10b, 50c) durch eine Vielzahl von Sendevorrichtungen über ein Kommunikationsnetz (100) zu zumindest zwei Empfangsvorrichtungen für die Verwaltung eines Mittels zum vorübergehenden Speichern (12, 52), wobei der Strom die Form von Datenpaketen hat, **dadurch gekennzeichnet, dass** eine der Sendevorrichtungen, Hauptsendevorrichtung (50a) genannt, Folgendes umfasst:
- Mittel zum Kennzeichnen jedes Pakets durch einen jeweiligen Identifikator,
- Mittel zum Übertragen des **gekennzeichneten** Pakets,
- Mittel für den Transfer des Identifikators auf andere Sendevorrichtungen (50b),
und dass eine Empfangsvorrichtung Folgendes umfasst:
- Mittel (14, 54), um eine vorausbestimmte Information ausgehend von mindestens einem Teil der Daten, die in einem empfangenen Paket enthalten sind, zu erzielen,
- Mittel (11, 55), um eine Meldung zu erzeugen, die für die vorausbestimmte Information repräsentativ ist, zu zumindest einer anderen Empfangsvorrichtung, die den gleichen Datenstrom empfängt,
- Mittel (14, 54), um alles oder einen Teil des empfangenen Pakets in dem Mittel zum vorübergehenden Speichern in Abhängigkeit von der Antwort auf die Meldung der anderen Datenempfangsvorrichtung, die den gleichen Strom empfängt, zu speichern oder nicht.

25. System nach Anspruch 24, **dadurch gekennzeichnet, dass** die anderen Sendevorrichtungen (50b) die Pakete, die sie zu übertragen haben, mit den von der Hauptsendevorrichtung transferierten Identifikatoren markieren.
